# EUROPÄISCHE PATENTSCHRIFT

(11) **EP 1 575 808 B1**
(45) Veröffentlichungstag und Bekanntmachung des Hinweises auf die Patenterteilung: **26.09.2007**
(21) Anmeldenummer: 03797951.5
(22) Anmeldetag: 25.07.2003
(51) Int. Cl.: B60R 21/00

(54) **BILDGEBER**
IMAGE GENERATOR
SYSTEME D'IMAGERIE

(30) Priorität: 16.11.2002 DE 10253501; 28.05.2003 DE 3001735
(43) Veröffentlichungstag der Anmeldung: 21.09.2005
(73) Patentinhaber: ROBERT BOSCH GMBH, 70442 Stuttgart (DE)
(72) Erfinder: ENGELBERG, Thomas, 31137 Hildesheim (DE); FREIENSTEIN, Heiko, 31141 Hildesheim (DE); TRINH, Hoang, 31134 Hildesheim (DE); BOTHE, Hans-Dieter, 30926 Seelze (DE)
(86) Internationale Anmeldenummer: PCT/DE2003/002507
(87) Internationale Veröffentlichungsnummer: WO 2004/045912

(56) Entgegenhaltungen:
- EP-A- 0 246 085
- EP-A- 0 332 715
- WO-A-01/60662
- DE-A- 19 757 118
- PATENT ABSTRACTS OF JAPAN vol. 1999, no. 03, 31. März 1999 (1999-03-31) & JP 10 322513 A (CANON INC), 4. Dezember 1998 (1998-12-04)

## Beschreibung

### Stand der Technik

Die Erfindung geht aus von einem Bildgeber nach der Gattung des unabhängigen Patentanspruchs.

Aus WO 01/60662 A1 ist bereits ein Bildgeber, der in einem Fahrzeug angeordnet ist, bekannt. Er wird hier zur Sitzbelegungserkennung verwendet.

Aus JP 10322513 ist es bekannt, ein Signalmuster in eine Signatverarbeitungskette eines Bildgebers einzuspeisen. Damit wird ein Selbsttest durchgerührt. Aus EP 0246085 A2 (Oberbegriff von Anspruch 1) ist es bekannt, auf ein Videosignal ein Rauschsignal eines Rauschsignalgenerators aufzuprägen, um damit Quasi-Änderungen einer aufgenommenen Szene zu erzeugen. Dies wird zu einem Selbsttest verwendet.

### Vorteile der Erfindung

Der erfindungsgemäße Bildgeber mit den Merkmalen des unabhängigen Patentanspruchs hat demgegenüber den Vorteil, dass der Bildgeber anhand seines Bildsignals seine Funktionsfähigkeit überwacht. Dadurch wird eine Sicherheitsanforderung an ein solches Bilderkennungssystem erfüllt. Der Bildgeber kann dabei sowohl zur Insassenerkennung, Bestimmung der Pose des Insassen oder zur Klassifizierung der Belegungssituation verwendet werden, aber auch zur Umfeldüberwachung und auch dabei beispielsweise zur Überrollerkennung. Insbesondere ist damit eine zusätzliche Sensorik zur Überwachung der Funktionsfähigkeit nicht mehr notwendig, bzw. es können Anforderungen an zusätzliche Überwachungsvorrichtungen reduziert werden. Insbesondere sind hier Bildgeber in sicherheitsrelevanten Anwendungen anwendbar, wie es Systeme zum Insassenschutz sind. Gerade hier ist die Funktionsfähigkeit des Bildgebers essentiell für die Funktionsfähigkeit.

Weiterhin ist es von Vorteil, dass der Bildgeber anhand wenigstens eines invarianten Musters das Bildsignal erzeugt. Dieses invariante Bildsignal wird dann zur Selbstüberwachung verwendet, indem es mit einem internen Referenzmuster verglichen wird. Dazu können natürlich vorkommende invariante Merkmale des Umfeldes oder von einem System automatisch induzierte invariante Merkmale, beispielsweise mit Hilfe eines Beleuchtungsmoduls verwendet werden.

Durch die in den abhängigen Ansprüchen aufgeführten Maßnahmen und Weiterbildungen sind vorteilhafte Verbesserungen des im unabhängigen Patentanspruch angegebenen Bildgebers möglich.

Die Selbstüberwachung des Bildgebers kann in einer Initialisierungsphase oder auch dauernd oder intermittierend während des Betriebs durchgeführt werden.

Darüber hinaus ist es von Vorteil, dass der Bildgeber mit einer Diagnoseeinheit verbindbar ist, die die Selbstüberwachung des Bildgebers aktiviert. Diese Diagnoseeinheit kann im Fahrzeug angeordnet sein oder auch außerhalb des Fahrzeugs, um dann über eine Funkverbindung die Selbstüberwachung durchzuführen. Denkbar ist, dass im Falle einer Aktivierung durch die Diagnoseeinheit auch ein erweitertes Testprogramm durchgeführt wird, da es möglich ist, zum Beispiel Musterdateien zu übertragen, oder auch Langzeittests durchzuführen. Weiterhin kann es von Vorteil sein, dass der Bildgeber manuell zur Selbstüberwachung aktivierbar ist. Dafür weist dann der Bildgeber entsprechende Bedienelemente oder Schnittstellen auf, die durch eine Betätigung eines Gerätes die Selbstüberwachung einleiten.

Der Bildgeber kann insbesondere tiefenbildgebend konfiguriert sein, d.h. es werden beispielsweise zwei Bildsensoren verwendet, um eine Tiefenauflösung eines Objekts zu erhalten. Dafür kann auch eine Matrix oder ein Array von Bildsensoren verwendet werden. Denkbar ist auch ein Tiefenbildsensor, der nach anderen physikalischen Prinzipien arbeitet, wie beispielsweise dem Laufzeitprinzip oder der Prinzip der strukturierten Beleuchtung.

Zur Selbstüberwachung, aber auch für andere Zwecke, kann es vorteilhaft sein, eine Beleuchtungsvorrichtung aufzuweisen, die dem Bildgeber zugeordnet ist.

### Zeichnung

Ausführungsbeispiele der Erfindung sind in der Zeichnung dargestellt und werden in der nachfolgenden Beschreibung näher erläutert.

### Es zeigen

- Figur 1: ein erstes Blockschaltbild des erfindungsgemäßen Bildgebers,
- Figur 2: ein zweites Blockschaltbild des erfindungsgemäßen Bildgebers,
- Figur 3: ein drittes Blockschaltbild des erfindungsgemäßen Bildgebers,
- Figur 4: ein viertes Blockschaltbild und
- Figur 5: ein fünftes Blockschaltbild.

### Beschreibung

Hochentwickelte, hochauflösende bild- bzw. tiefenbildgebende Mess-Systeme sind für Anwendungen in der Kraftfahrzeugtechnik zunehmend interessant. Als videobasierte Assistenzsysteme und Sicherheitssysteme sind hier besondere Anwendungen vorgesehen. Je stärker der Mensch entlastet werden soll, desto zuverlässiger muss ein solches Mess-System sein. In diesem Zusammenhang kommt auch der Fähigkeit des Systems, einen Ausfall zu detektieren und geeignete Maßnahmen einzuleiten, eine große Bedeutung zu. Erfindungsgemäß wird nun ein solcher Bildgeber vorgeschlagen, der diese Fähigkeit zur Selbstüberwachung hat, wobei dieser Bildgeber im Kraftfahrzeug eingebaut ist. Kern der Erfindung ist die Integration dieser Selbstüberwachungsfunktionalität in ein hoch auflösendes bild- bzw. tiefenbildgebendes Mess-System.

Da solche Mess-Systeme zur Messwertgenerierung über mindestens eine leistungsfähige Auswerteeinheit verfügen, wird eine Selbstüberwachungsfunktionalität realisiert, indem durch Methoden der Signalverarbeitung mit Hilfe der Auswerteeinheit aus den Sensorsignalen selbst Größen ermittelt werden, die auf die Funktionstüchtigkeit des Sensors bzw. des Mess-Systems schließen lassen. Über diese Schnittstelle die Funktionstüchtigkeit des Bildgebers übermittelt. Die Selbstüberwachung kann während der Initialisierungsphase des Bildgebers zu bestimmten Zeitpunkten oder permanent durchgeführt werden. Die Selbstüberwachung kann auch von außen, d.h. durch ein übergeordnetes System wie eine Diagnoseeinheit oder manuell aktiviert werden. Denkbar ist, dass im Falle einer Aktivierung durch ein Diagnosesystem auch ein erweitertes Testprogramm durchgeführt wird, da es möglich ist, beispielsweise Musterdateien zu übertragen oder auch Langzeittests durchzuführen.

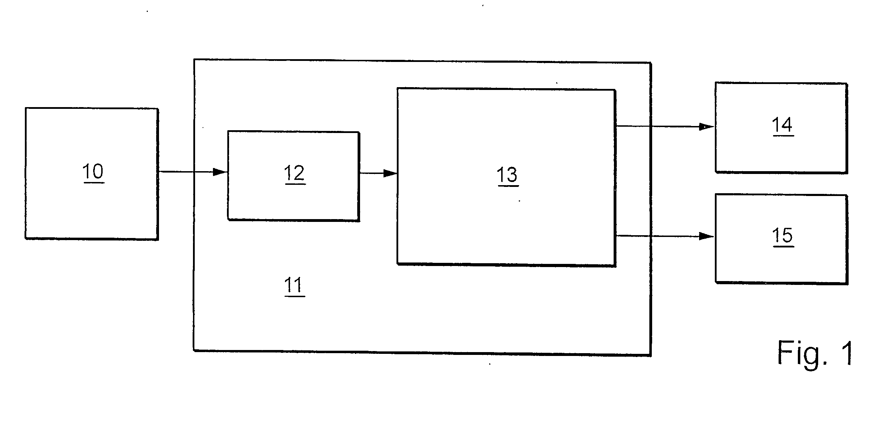

Figur 1 zeigt in einem ersten Blockschaltbild den erfindungsgemäßen Bildgeber. Der physikalische Prozess 10 (die Szene) wird durch den Sensor 12 als Bildsignal abgebildet. Der Sensor 12 bildet mit einer Verarbeitungseinheit 13 ein Mess-System. Das Bildsignal, das vom Sensor 12 erzeugt wird, wird von der Verarbeitungseinheit 13 aufbereitet und verarbeitet. Über eine erste Schnittstelle 14 wird das Mess-Signal, also das Bildsignal zu weiteren Systemen, wie beispielsweise einem Steuergerät für die Insassenerkennung übertragen.

Über eine weitere Schnittstelle 15 wird der Status des Bildgebers, der hier dargestellt ist, übertragen und der auch anhand des Bildsignals festgestellt wurde. Wie oben dargestellt wird der Status des Bildgebers, also seine Selbstüberwachung, durch die Ausnutzung des Vorwissens über ihre invarianten Muster, durchgeführt. Die Schnittstellen 14 und 15 können auch in einer Schnittstelle zusammengefasst sein und sind dann nur logisch getrennt. Die Schnittstellen können hier Zweidrahtschnittstellen sein oder auch Schnittstellen zu einem Bussystem.

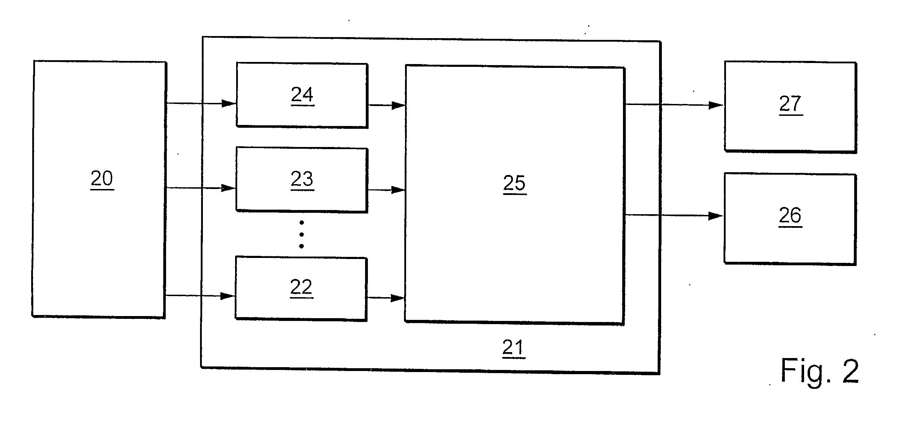

Figur 2 zeigt nun einen Bildgeber, der mehr als einen Sensor zur Bildaufnahme aufweist und damit auch zur Tiefenbildgebung konfiguriert ist. Beispielhaft sind hier drei Sensoren 22 bis 24 dargestellt, es ist jedoch möglich, lediglich zwei Sensoren oder auch mehr Sensoren zu verwenden. Das Mess-System 21 wird daher aus den Sensoren 22 bis 24 und der Verarbeitungseinheit 25 gebildet. Der physikalische Prozess 20 (die Szene) wird durch die Sensoren 22-24 abgebildet. Die Verarbeitungseinheit 25 nimmt die Bildsignale der Bildsensoren 22 bis 24 auf, verarbeitet diese und führt dann in Abhängigkeit von der Auswertung dieser Bildsignale Signale auf die Schnittstellen 26 und 27, um einerseits den Status des Bildgebers und andererseits das Mess-Signal selbst zu übertragen. Die Sensoren 22 bis 24 können an einzelne Schnittstellenbausteine der Verarbeitungseinheit 25 angeschlossen sein, sie können jedoch auch über einen Multiplexer oder einen internen Bus mit der Verarbeitungseinheit 25 verbunden sein. Der Bildgeber kann in einer baulichen Einheit, in der auch die Schnittstellen 26 und 27 integriert sind, ausgeführt sein. Es ist jedoch möglich, dass kein Gehäuse für diese gesamten Komponenten vorliegt, sondern diese verteilt angeordnet sind. Die Verarbeitungseinheit 25 führt dann, wie oben beschrieben, die Analyse des Bildsignals durch, um die Selbstüberwachung des Bildgebers durchzuführen.

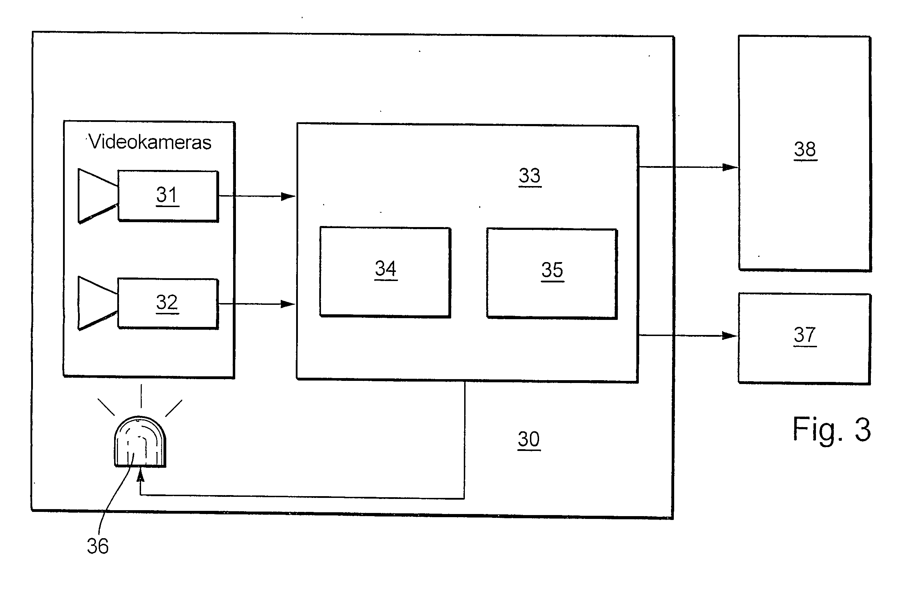

Figur 3 zeigt in einem dritten Blockschaltbild den erfindungsgemäßen Bildgeber. Hier sind zwei Sensoren als Videokameras 31 und 32 vorhanden, die an eine Verarbeitungseinheit 33 angeschlossen sind. Diese weist ein Programm 34 zur Sensordatenverarbeitung und ein Programm 35 zur Selbstüberwachung auf. Die Selbstüberwachung 35 wird auch an den Bildsignalen der Videokameras 31 und 32 durchgeführt. Zusätzlich steuert die Verarbeitungseinheit 33 eine Beleuchtungseinheit bzw. einen Signalgeber 36 an, um beispielsweise die Selbstüberwachung durch Vergleich selbstinduzierter Muster mit deren interner Repräsentation durchzuführen. Die Verarbeitungseinheit 33 ist weiterhin an Schnittstellen 37 und 38 angeschlossen, die jeweils zur Übertragung des Mess-Signals, also des Bilds oder Tiefenbilds und des Status bzw. des Ergebnisses der Selbstüberwachung dienen. Das Mess-System 30 besteht also aus den Videokameras 31 und 32, der Verarbeitungseinheit 33 und der Beleuchtungseinheit 36. Der gesamte Bildgeber wird durch die Schnittstellen 37 und 38 ergänzt. Die Sensoren 31 und 32 sind hier als Videokameras ausgebildet. Die Ausgangssignale werden der Auswerteeinheit 33 zugeführt, die zur Erzeugung der räumlichen Daten geeignete Verarbeitungsschritte wie Bildverarbeitung, Korrelationsverfahren oder Triangulation ausführt. Diese Verarbeitungseinheit 33 führt aber auch geeignete Verfahren zur Selbstüberwachung des Mess-Systems aus. Ausgangssignale des Stero-Video-Mess-Systems sind in diesem Ausführungsbeispiel Bild, Tiefenbild und Statussignal des Mess-Systems 30.

In der nachfolgenden Tabelle sind mögliche Probleme, die zu einer eingeschränkten Funktionsfähigkeit des ausgeführten Mess-Systems führen können, aufgeführt. Spalte 2 und 3 enthalten die geeigneten Daten und Methoden der Signalverarbeitung, um die eingeschränkte Funktionsfähigkeit festzustellen.

| Problem | Analysierte Daten | Auswahl von Verfahren der Selbstüberwachung |
|---|---|---|
| (partielle) Verdeckung des Sensors | Grauwertbild des Sensors 1 | Ausnutzung von Vorwissen über invariante Muster: |
| | | • Natürlich vorkommende invariante Merkmale des Umfeldes. |
| | | • Vom System automatisch induzierte invariante Merkmale (z.B mit Hilfe eines Beleuchtungsmoduls) |
| | Grauwertbild des Sensors 2 | Siehe Grauwertbild des Sensors 1 |
| | Tiefenbild | Siehe Grauwertbild des Sensors 1 |
| Dekalibrieru ngs-detektion | Grauwertbild des Sensors 1 | Ausnutzung von Vorwissen über invariante Muster: |
| | | • Natürlich vorkommende invariante Merkmale des Umfeldes. |
| | | • Vom System automatisch induzierte invariante Merkmale (z.B mit Hilfe eines Beleuchtungsmoduls) |
| | Grauwertbild des Sensors 2 | Siehe Grauwertbild des Sensors 1 |

Ein stereo-video-basiertes Mess-System ist als ein typisches Beispiel für ein hochauflösendes bild- oder tiefenbildgebendes Mess-System zu sehen, auf das man viele der vorgestellten Methoden der Signalverarbeitung bzw. Mustererkennung zur Selbstüberwachung anwenden kann. Insbesondere eine weitgehend unabhängige Erzeugung der Einzelsensorsignale sollte eine leistungsfähige Selbstüberwachungsfunktionalität ermöglichen.

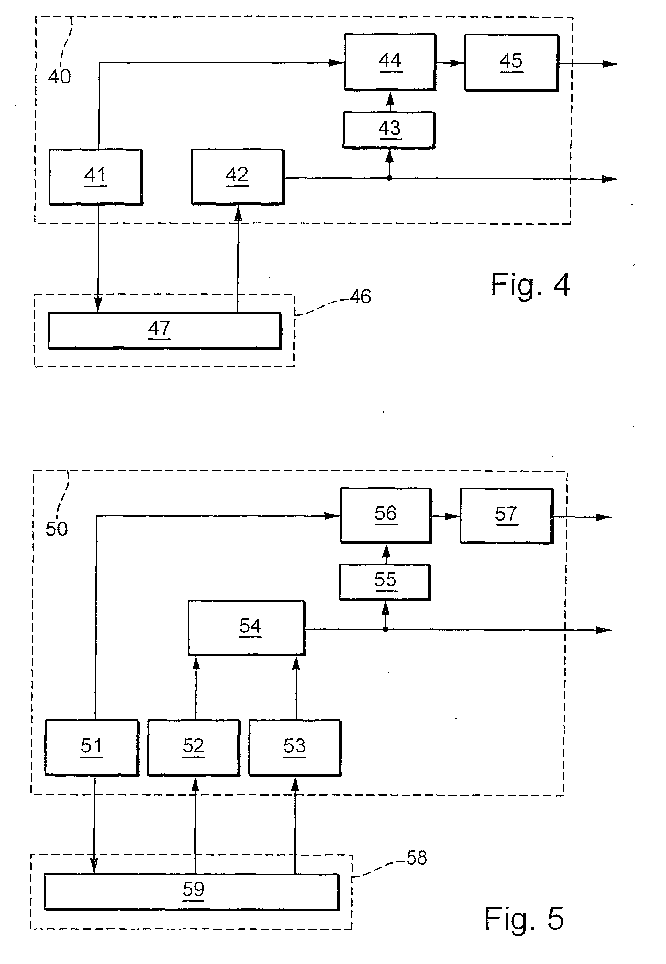

Figur 4 zeigt ein viertes Blockschaltbild des erfindungsgemäßen Bildgebers. Ein Video-Sensorsystem 40 weist ein Kamerasystem 42 auf, das einerseits mit einer Bildvorverarbeitung 43 und andererseits mit einem Ausgang des Video-Sensorsystems verbunden ist. Die Bildvorverarbeitung 43 ist mit einer Vergleichseinheit 44 verbunden, die über einen Ausgang mit einer Auswerteeinheit 45 und über einen Eingang mit einer Einrichtung zur strukturierten Beleuchtung verbunden ist. Die Auswerteeinheit 45 liefert über einen Ausgang des Video-Sensorsystems 40 den Sensorstatus.

Die Einrichtung zur strukturierten Beleuchtung 41 bestrahlt mit einem strukturierten Licht als ein Referenzmuster die Umgebung des Video-Sensorsystems 40 und dabei insbesondere eine Oberfläche 47, auf der das Referenzmuster abgebildet wird. Diese Oberfläche wird dann als Referenzoberfläche 47 bezeichnet. Die Referenzoberfläche 47 ist starr und ortsfest. Als Referenzoberflächen sind im Erfassungsbereich des Video-Sensorsystems 40 vorhandene Objektoberflächen denkbar, wie beispielsweise ein Dachhimmel bei Verwendung des Sensors zur Überwachung eines Kraftfahrzeugsinnenraums. Es sind jedoch auch spezielle Kalibrierkörper möglich, die beispielsweise während des Fertigungsprozesses in einer definierten Lage und Orientierung eingebracht werden.

Das Kamerasystem 42, das aus einer oder mehreren Kameras bestehen kann, erfasst das Referenzmuster auf der Referenzoberfläche 47. Die zweidimensionalen Kamerabilder werden in der Vergleichseinheit 44 mit dem Referenzmuster verglichen, wobei es sich auch um zweidimensionale Kamerabilder handeln kann, die in der optionalen Bildvorverarbeitung 43 aufbereitet wurden. Diese Aufbereitung kann eine Filterung sein. Die Vergleichseinheit 44 kann eine Speichereinheit aufweisen, in der beispielsweise die Referenzmuster gespeichert sind, sofern diese nicht von der Einheit zur strukturierten Beleuchtung in Form eines Signals zugeführt werden. In der Auswerteeinheit 45 wird dann auf Basis der Ergebnisse der Vergleichseinheit 44 der Sensorstatus ermittelt. Als Sensorstatus kann beispielsweise gesehen werden, dass der Sensor verdeckt oder unverdeckt ist und/oder die Sensoroptik fokussiert oder unfokussiert ist und/oder die optische Abbildung verzerrt oder unverzerrt ist. Die Auswerteeinheit 45 kann auch einen Speicher enthalten, in dem beispielsweise bestimmte Muster, die beim Vergleich des Referenzmusters mit den Kamerabildern eines gestörten Video-Sensorsystems entstehen, gespeichert werden können.

Beispielsweise kann mit der oben beschriebenen Einrichtung eine Defokussierung des Sensors festgestellt werden, indem analysiert wird, ob eine scharfe Abbildung des Referenzmusters in das Kamerabild vorliegt. Außerdem kann eine vollständige oder teilweise Verdeckung des Sensors detektiert werden, indem geprüft wird, ob das Referenzmuster vollständig und unverzerrt im Kamerabild abgebildet wird. Verzerrungen der optischen Abbildung führen zu einer verzerrten Abbildung des Referenzmusters in das Kamerabild und können so mit Hilfe der Vergleichseinheit 44 und der Auswerteeinheit 45 festgestellt werden. Weitere Fehler, die sich mit diesem System detektieren lassen, sind eine Verschmutzung der Optik und eine Dejustierung der absoluten Kalibrierung. Hier wird die resultierende Verschiebung und Verzerrung des Referenzmusters detektiert. Auf diese Daten kann sogar initial kalibriert oder nachkalibriert werden.

Die Einrichtung zur strukturierten Beleuchtung 41 kann im Videosensor integriert sein. Speziell im Fertigungsprozeß und für die Überprüfung des Videosensors in einer Werkstatt ist aber auch eine vom Videosensor getrennte Einrichtung zur strukturierten Beleuchtung. In diesem Fall ist eine definierte Ausrichtung der Einrichtung zur strukturierten Beleuchtung im Bezug zum Videosensor erforderlich. Bei dieser Vorgehensweise wird also im einfachsten Fall das Videobild der strukturierten Beleuchtung direkt interpretiert. Es ist auch eine Auswertung eines dreidimensionalen Bildes möglich.

Figur 5 zeigt ein weiteres Blockschaltbild. Ein Video-Sensorsystem 50 weist zwei Kameras 52 und 53 auf, die ihr Kamerabild jeweils an eine Einheit 54 zur Bestimmung von dreidimensionalen Messwerten liefern. Daraus ergibt sich dann eine dreidimensionale Punktwolke, die einerseits einer Signalvorverarbeitung 55 und andererseits einem Ausgang des Video-Sensorsystems 50 zugeführt wird. Die Signalvorverarbeitung 55 ist an eine Vergleichseinheit 56 angeschlossen, an die auch eine Einrichtung 51 zur strukturierten Beleuchtung angeschlossen ist. Die Vergleichseinheit 56 ist über einen Datenausgang an eine Auswerteeinheit 57 angeschlossen, die wiederum den Sensorstatus ausgibt.

Die Einrichtung zur strukturierten Beleuchtung 51 beleuchtet eine Referenzoberfläche in der Umgebung 58 des Videosensors. Das reflektierte Muster wird von den Kameras 52 und 53 aufgenommen. Die Einheit 54 bestimmt die dreidimensionale Punktewolke aus den Kamerabildern auf Basis des Stereomessprinzips. Zusätzlich zur Bestimmung der dreidimensionalen Punktewolke können auch die zweidimensionalen Kamerabilder direkt ausgewertet werden. Eine weitere Möglichkeit besteht in der Auswertung der dreidimensionalen Messwerte mittels eines Range-Sensors, der nach dem Time-of-Flight-Prinzip arbeitet.

## Patentansprüche

1. Bildgeber für ein Fahrzeug, wobei der Bildgeber derart konfiguriert ist, dass der Bildgeber anhand eines Bildsignals seine Funktionsfähigkeit überwacht, **dadurch gekennzeichnet, dass** der Bildgeber derart konfiguriert ist, dass der Bildgeber das Bildsignal anhand wenigstens eines invarianten Musters erzeugt, wobei, als das wenigstens eine invariante Muster, natürlich vorkommende invariante Merkmale oder vom Bildgeber automatisch induzierte Merkmale, vorzugsweise mit Hilfe eines Beleuchtungsmoduls, verwendet werden.

2. Bildgeber nach Anspruch 1, **dadurch gekennzeichnet, dass** der Bildgeber eine Auswerteeinheit (13, 25, 33) aufweist, die aus dem Bildsignal wenigstens einen Wert ableitet, den die Auswerteeinheit (13, 25, 33) mit wenigstens einem Grenzwert zur Überwachung der Funktionsfähigkeit vergleicht.

3. Bildgeber nach Anspruch 1 oder 2, **dadurch gekennzeichnet, dass** der Bildgeber eine Schnittstelle (15, 26, 37) aufweist, die derart konfiguriert ist, dass über die Schnittstelle (15, 26, 37) die Funktionsfähigkeit des Bildgebers übertragen wird.

4. Bildgeber nach einem der vorhergehenden Ansprüche, **dadurch gekennzeichnet, dass** der Bildgeber derart konfiguriert ist, dass der Bildgeber während einer Initialisierungsphase seine Funktionsfähigkeit überwacht.

5. Bildgeber nach einem der vorhergehenden Ansprüche, **dadurch gekennzeichnet, dass** der Bildgeber mit einer Diagnoseeinheit verbindbar ist, die die Selbstüberwachung des Bildgebers aktiviert.

6. Bildgeber nach einem der vorhergehenden Ansprüche, **dadurch gekennzeichnet, dass** der Bildgeber derart konfiguriert ist, dass die Selbstüberwachung manuell aktivierbar ist.

7. Bildgeber nach einem der vorhergehenden Ansprüche, **dadurch gekennzeichnet, dass** der Bildgeber tiefenbildgebend konfiguriert ist.

## Claims

1. Image generator for a vehicle, wherein the image generator is configured in such a way that the image generator monitors its operational capability by means of an image signal, **characterized in that** the image generator is configured in such a way that the image generator generators the image signal by means of at least one invariable pattern, wherein naturally occurring invariant features or features which are induced automatically by the image generator, preferably with the aid of an illumination module, are used as the at least one invariable pattern.

2. Image generator according to Claim 1, **characterized in that** the image generator has an evaluation unit (13, 25, 33) which derives, from the image signal, at least one value which the evaluation unit (13, 25, 33) compares with at least one limiting value for monitoring the operational capability.

3. Image generator according to Claim 1 or 2, **characterized in that** the image generator has an interface (15, 26, 37) which is configured in such a way that the operational capability of the image generator is transmitted over the interface (15, 26, 37).

4. Image generator according to one of the preceding claims, **characterized in that** the image generator is configured in such a way that the image generator monitors its operational capability during an initialization phase.

5. Image generator according to one of the preceding claims, **characterized in that** the image generator can be connected to a diagnostic unit which activates the self-monitoring of the image generator.

6. Image generator according to one of the preceding claims, **characterized in that** the image generator is configured in such a way that the self-monitoring can be actuated manually.

7. Image generator according to one of the preceding claims, **characterized in that** the image generator is configured to produce depth images.

## Revendications

1. Générateur d'image pour véhicule selon lequel ce générateur est configuré pour qu'à l'aide d'un signal d'image il surveille son aptitude au fonctionnement,
**caractérisé en ce qu'**
il est configuré pour générer le signal d'image à l'aide d'au moins un modèle invariant et celui-ci utilise les caractéristiques invariantes se produisant naturellement ou les caractéristiques induites automatiquement par le générateur d'image, de préférence à l'aide d'un module d'éclairage.

2. Générateur d'image selon la revendication 1,
**caractérisé en ce qu'**
il comporte une unité d'exploitation (13, 25, 33) qui dévie au moins une valeur du signal d'image, que l'unité d'exploitation (13, 25, 33) compare à au moins une valeur limite pour surveiller l'aptitude au fonctionnement.

3. Générateur d'image selon l'une quelconque des revendications 1 ou 2,
**caractérisé en ce qu'**
il comporte une interface (15, 26, 37) configurée pour qu'elle (15, 26, 37) transmette l'aptitude au fonctionnement du générateur d'image.

4. Générateur d'image selon l'une quelconque des revendications précédentes,
**caractérisé en ce qu'**
il est configuré pour surveiller son aptitude au fonctionnement pendant une phase d'initialisation.

5. Générateur d'image selon l'une quelconque des revendications précédentes,
**caractérisé en ce qu'**
il est relié à une unité de diagnostic qui active l'autosurveillance du générateur d'image.

6. Générateur d'image selon l'une quelconque des revendications précédentes,
**caractérisé en ce qu'**
il est configuré pour activer manuellement l'autosurveillance.

7. Générateur d'image selon l'une quelconque des revendications précédentes,
**caractérisé en ce qu'**
il est configuré pour donner une profondeur d'image.
